(19) Europäisches Patentamt
European Patent Office
Office européen des brevets

(11) **EP 2 487 813 B1**

(12) **EUROPEAN PATENT SPECIFICATION**

(45) Date of publication and mention
of the grant of the patent:
**17.04.2013 Bulletin 2013/16**

(51) Int Cl.:
*H04L 25/03* (2006.01)        *H04B 10/60* (2013.01)
*H04B 10/25* (2013.01)

(21) Application number: **11290070.9**

(22) Date of filing: **01.02.2011**

(54) **Polarization de-multiplex for multilevel signals**

Polarisationsdemultiplexierung für mehrstufige Signale

De-multiplexage de polarisation pour signaux multi-niveaux

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.08.2012 Bulletin 2012/33**

(73) Proprietor: **Alcatel Lucent
75007 Paris (FR)**

(72) Inventor: **Buchali, Fred
71336 Waiblingen (DE)**

(74) Representative: **Wetzel, Emmanuelle
Alcatel Lucent
Intellectual Property & Standards
70430 Stuttgart (DE)**

(56) References cited:
**GB-A- 2 429 382        US-A1- 2008 031 633
US-A1- 2009 116 844**

## Description

The present document relates to optical transmission systems. In particular, the present document relates to a system and method for performing polarization de-multiplexing in optical polarization multiplexed transmission systems.

Coherent optical transmission systems are promising candidates for high speed optical transmission systems at 100 Gb/s data rate and beyond. Transmission systems at 100Gb/s and beyond typically require a higher spectral efficiency in order to be compatible to the 50 GHz grid of Wavelength Division Multiplexing (WDM). In order to achieve higher spectral efficiency, higher order modulation schemes may be required such as 16QAM and higher. As such, more complex constellations than BPSK or QPSK may need to be used.

The use of complex constellations poses challenges to the optical receivers which detect a transmitted constellation point, i.e. a transmitted data symbol, from a distorted received optical signal. The present document addresses the issue of equalizing and/or polarization multiplexing a received optical signal at an optical receiver.

An equalizing unit according to the state of the art is known from US-A-2008/0031633.

According to an aspect an equalizing unit for an input signal is described. The input signal may have been amplitude and phase modulated using a modulation scheme, e.g. a QAM type modulation scheme such as 16QAM, 64 QAM, 128QAM, or 256QAM. Typically, the input signal has been modulated at a transmitter and subsequently transmitted over a transmission channel. As such, the equalizing unit may be situated at a receiver in order to compensate for distortions incurred by the originally transmitted input signal within the transmission channel.

Prior to the equalizing unit, the input signal may have been derived from an optical signal received at a coherent optical receiver. The input signal may correspond to a digital signal having a plurality of samples. Each sample may comprise an input amplitude and an input phase. As such, the input samples may be represented as complex numbers, each having an input amplitude and an input phase.

The equalizing unit may be configured or adapted to perform polarization de-multiplexing of the input signal. This is particularly relevant in the context of polarization multiplexed optical transmission systems, where data is transmitted via two multiplexed, orthogonally polarized, optical signals. Alternatively or in addition, the equalizing unit may be configured to perform the equalization of chromatic dispersion and/or polarization mode dispersion incurred by the input signal within the optical transmission channel.

The equalizing unit may comprise a filter adapted to filter the input signal using one or more filter taps, thereby yielding an output signal. In particular, the filter may be a finite impulse response (FIR) filter. Typically, the filter has a plurality of (i.e. more than one) filter taps. In a similar manner to the input signal, the output signal may comprise a plurality of output samples having a plurality of output amplitudes, respectively. This means that the output samples may be represented as complex numbers, each having an output amplitude and an output phase.

The equalizing unit may comprise a filter adaption unit adapted to determine a first deviation of the output amplitude of at least some of the plurality of output samples from a first threshold. In particular, the first deviation may be determined by considering only output samples having an output amplitude smaller or equal to the first threshold. Furthermore, the filter adaption unit may be adapted to determine a second deviation of the output amplitude of at least some (other) of the plurality of output samples from a second threshold. In particular, the second deviation may be determined by considering only output samples having an output amplitude greater or equal to the second threshold.

Typically, the second threshold is greater than the first threshold. Furthermore, the first threshold and the second threshold may be associated with a first constellation amplitude and a second constellation amplitude of constellation points of the modulation scheme, respectively. In particular, the first threshold may be used to track or estimate the first constellation amplitude and the second threshold may be used to track or estimate the second constellation amplitude. The first constellation amplitude may be a particular amplitude of at least one constellation point, e.g. the first constellation amplitude may be the smallest amplitude of constellation points of the modulation scheme. In a similar manner, the second constellation amplitude may be a particular amplitude of at least one other constellation point, e.g. the second constellation amplitude may be the highest amplitude of constellation points of the modulation scheme. Typically, the first constellation amplitude is smaller than the second constellation amplitude.

The adaption unit may be configured to update the one or more filter taps based on the first and second deviations. In particular, the one or more filter taps may be updated using a weighted sum of the first and second deviation. Furthermore, the filter adaption unit may be configured to update the one or more filter taps using a constant modulus algorithm. This constant modulus algorithm may use the weighted sum of the first and second deviation in order to update the one or more filter taps.

The equalization unit may comprise a threshold adaption unit configured to update the first and second thresholds based on the plurality of output samples. As such, the first and second thresholds may be adapted to the first and second constellation amplitudes, respectively. In particular, the threshold adaption unit may be configured to determine a first indicator of an amount of output samples having an output amplitude smaller or equal to the first threshold, and to determine a second indicator of an amount of output samples having an output amplitude greater or equal to the second threshold. As such, the threshold adaption unit may update the first and second threshold based on the first and second indicators. The first indicator may indicate the portion of output samples from the plurality of output samples which have an output amplitude smaller or equal to the first threshold. In a similar manner, the second indicator may indicate the portion of output samples from the plurality of output samples which have an output amplitude greater or equal to the second threshold.

The threshold adaption unit may be configured to compare the first and second indicators with a first target indicator and/or a second target indicator. The result of this comparison may be used to update the first and second thresholds. The first target indicator may be associated with a probability for an output sample to have an output amplitude smaller or equal to the first constellation amplitude. The second target indicator may be associated with a probability for an output sample to have an output amplitude greater or equal to the second constellation amplitude. As such, the threshold adaption unit may be configured to compare the first and second indicators with the first target indicator and the second target indicator, respectively. Alternatively or in addition, the threshold adaption unit may be configured to compare the first and second indicators with the sum of first target indicator and the second target indicator.

In particular, the first target indicator may be the probability of occurrence of output samples having an output amplitude smaller or equal to the first constellation amplitude. The second target indicator may be the probability of occurrence of output samples having an output amplitude greater or equal to the second constellation amplitude. These probabilities may be based on the mathematical probabilities given by the constellation diagram of the modulation scheme, i.e. the first target indicator may be the probability of constellation points within the constellation diagram to have an amplitude smaller or equal to the first constellation amplitude. In a similar manner, the second target indicator may be the probability of constellation points within the constellation diagram to have an amplitude greater or equal to the second constellation amplitude.

If the first indicator is higher than the first target indicator, then the first threshold may be decreased. On the other hand, the first threshold may be increased, if the first indicator is lower than the first target indicator. In a similar manner, the second threshold may be increased, if the second indicator is higher than the second target indicator and/or vice versa. In other words, the first and/or second thresholds may be adapted such that the first and/or second indicators correspond to the first and/or second target indicators, respectively.

Alternatively or in addition, the adjustment of the first and/or second threshold may be performed on a combination of the first and second target indicators. By way of example, the adjustment may be performed on the basis of the sum of the first and second target indicator. In particular, if the sum of the first and second indicator is higher than the sum of the first and second target indicator, then the first threshold may be decreased and/or the second threshold may be increased. On the other hand, if the sum of the first and second indicator is lower than the sum of the first and second target indicator, then the first threshold may be increased and/or the second threshold may be decreased.

The equalization unit, e.g. the threshold adaption unit, may further be configured to determine a weight based on the first and second indicators. The determined weight may be used to determine the weighted sum of the first and second deviations. In particular, the weight may be determined such that the relative emphasis on the first deviation in the weighted sum is adapted in accordance to the relative significance of a deviation of the first indicator from the probability for an output sample to have an output amplitude smaller or equal to the first constellation amplitude (relative to a deviation of the second indicator from the probability for an output sample to have an output amplitude greater or equal to the second constellation amplitude). In an embodiment where the probability for an output sample to have an output amplitude smaller or equal to the first constellation amplitude is equal to the probability for an output sample to have an output amplitude greater or equal to the second constellation amplitude, the emphasis on the first deviation in the weighted sum is increased if the first indicator is greater than the second indicator.

In particular, the weight may be associated with the first deviation, thereby adjusting the emphasis of the first deviation on the overall deviation which reflects the first and second deviations. The weight may be increased, if the ratio of the first indicator over the second indicator is higher than the ratio of the first target indicator over the second target indicator (and/or vice versa). As a result of putting a higher emphasis on the first deviation, the first and second thresholds are modified until the ratio of the first and second indicators corresponds to the ratio of the first and second target indicators. In particular, the speed of conversion of the algorithm may be improved.

As such, the equalizing unit is adapted to perform an adaption of the filter coefficients (or filter taps) by tracking deviations from at least two different thresholds, wherein the thresholds are associated with particular amplitudes of constellation points of the underlying modulation scheme. As the exact amplitudes of the constellation points (i.e. the first and second constellation amplitudes) are not necessarily known at the receiver, the first and second thresholds are iteratively adapted to the desired first and second constellation amplitudes. The use of at least two thresholds and the appropriate design of a threshold adaption algorithm as outlined in the present document ensure that the first and second thresholds appropriately estimate the first and second constellation amplitudes. By consequence, this ensures the appropriate adaption of the filter coefficients.

According to another aspect, a coherent optical receiver is described. The optical receiver may comprise a coherent mixer configured to superimpose a received optical signal with an optical signal generated by a local oscillator. This may be performed such that two sets of in-phase and quadrature phase signals are generated, wherein the two sets have orthogonal polarizations with respect to one another. The optical receiver may further comprise an optical to digital conversion unit configured to convert the two sets of in-phase and quadrature phase signals into two digital complex input signals, respectively. The two input signals comprise a plurality of input samples having a plurality of input amplitudes and a plurality of input phases, respectively. The optical to digital conversion may be performed by a succession of an optical to electrical converter (e.g. a photodiode) and an analog to digital converter (ADC). Furthermore, the optical receiver may comprise an equalization unit according to any of the aspects and features outlined in the present document. The equalization unit may be configured to polarization de-multiplex and/or equalize the two input signals.

According to a further aspect, a method for equalizing an input signal is described. The input signal may comprise a plurality of input samples having a plurality of input amplitudes, respectively. The input signal may have been amplitude and phase modulated using a modulation scheme and subsequently transmitted over a transmission channel. The method may comprise filtering the input signal using one or more filter taps, thereby yielding an output signal; wherein the output signal comprises a plurality of output samples having a plurality of output amplitudes, respectively; determining a first deviation of the output amplitude of at least some of the plurality of output samples from a first threshold; determining a second deviation of the output amplitude of at least some of the plurality of output samples from a second threshold; wherein the second threshold is greater than the first threshold and wherein the first and second thresholds are associated with a first constellation amplitude and second constellation amplitude of constellation points of the modulation scheme, respectively; and updating the one or more filter taps using the first and second deviation.

According to a further aspect, a software program is described. The software program may be stored on a computer-readable medium (which may be tangible or otherwise non-transitory) as instructions that are adapted for execution on a processor and for performing the aspects and features outlined in the present document when carried out on a computing device.

According to another aspect, a storage medium comprising a software program is described. The storage medium may be memory (e.g. RAM, ROM, etc.), optical media, magnetic media and the like. The software program may be adapted for execution on a processor and for performing the aspects and features outlined in the present document when carried out on a computing device.

According to a further aspect, a computer program product is described. The computer program product may comprise executable instructions for performing the aspects and features outlined in the present document when executed on a computing device.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The claimed subject-matter is explained below in an exemplary manner with reference to the accompanying drawings, wherein

Fig. 1 illustrates an example optical transmission system;
Fig. 2a illustrates an example coherent optical receiver;
Fig. 2b illustrates an example overview of a coherent optical receiver;
Fig. 2c illustrates example signal processing in an optical receiver;
Fig. 3 illustrates an example processing unit used for polarization de-multiplexing;
Fig. 4a shows an example constellation diagram for QPSK modulation;
Fig. 4b shows an example constellation diagram for 16QAM modulation;
Fig. 4c illustrates a plurality of example constellation circles used for the determination of a plurality of error functions; and
Fig. 5 illustrates an example implementation of a threshold directed multi modulus algorithm.

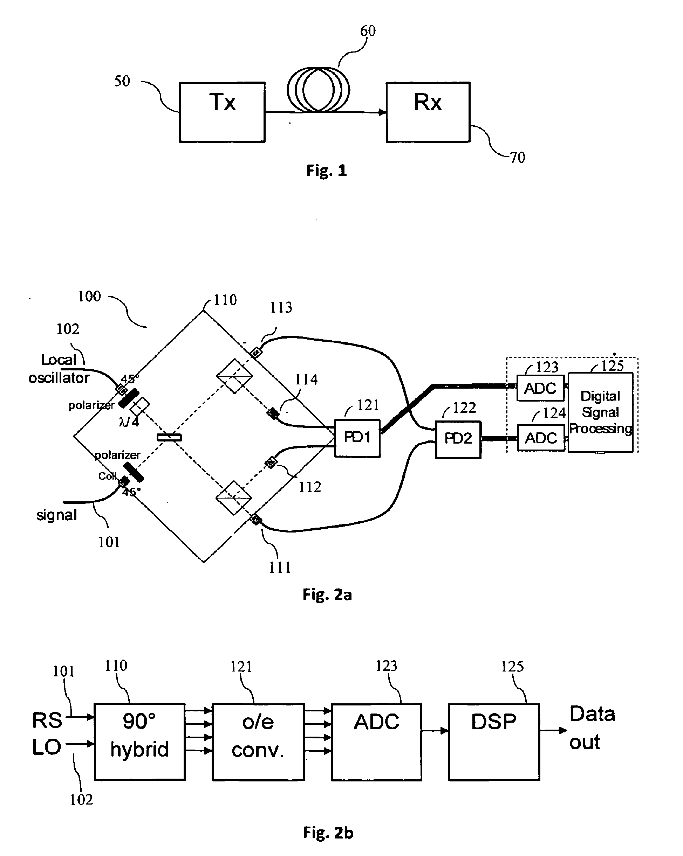

In fiber-optic communications, wavelength-division multiplexing (WDM) is a technology which multiplexes multiple optical carrier signals on a single optical fiber by using different wavelengths (colors) of laser light to carry different signals. This allows for a multiplication in capacity, in addition to enabling bidirectional communications over one strand of fiber. Fig. 1 illustrates an optical transmission system comprising an optical transmitter 50, an optical transmission path 60 (e.g. an optical fiber) and an optical receiver 70.

At an optical transmitter 50 an optical carrier of a certain wavelength is modulated with a certain modulation scheme, in order to transmit data to the corresponding optical receiver 70. Different modulation schemes may be used for this purpose, such as B-PSK (binary phase-shift keying) which maps one bit of data into a symbol, Q-PSK (quadrature phase-shift keying) which maps 2 bits of data into a symbol, M-PSK which maps $\log_2(M)$ bits of data into a symbol. Furthermore, x-QAM (quadrature amplitude modulation) schemes may be used, wherein x represents the number of constellation points on the QAM grid. Typical forms of QAM are 16-QAM, 64-QAM, 128-QAM and 256-QAM. QAM modulation schemes modulate the amplitude and the phase of the optical carrier.

Subsequent to modulation, the modulated optical carrier signal is transmitted over the optical transmission network 60 or optical transmission channel 60 to the corresponding receiver 70. Typically, the optical receiver 70 is a coherent optical receiver 100 comprising a coherent mixer 110 for coherent detection of PSK or QAM modulated signals. An exemplary coherent receiver 100 is shown schematically in Fig. 1. A received signal 101 at a certain optical carrier frequency and an optical signal 102 of the local oscillator (LO) at a certain local oscillator frequency are combined in the coherent mixer 110, which generates four optical interference signals for four output ports 111, 112, 113, 114. The mixer 110 is typically designed such that, from one port to the next, the relative phase between the received optical signal 101 and the LO signal 102 is rotated by 90°. Ports 111 & 113 and 112 & 114 are fed to two sets of balanced photodiodes 121, 122. The coherent mixer 110 is used to generate optical signals that will create in-phase I and quadrature Q components after beating on the photodiodes. In other words, the combination of the coherent mixer 110 and the photodiodes generate I and Q components. Due to the 90° degree rotation, two sets of in-phase and quadrature components may be obtained, wherein the two sets correspond to two distinct polarizations of the optical signal which are orthogonal with respect to one another. It is to be denoted that the methods and systems outlined in the present document can be applied to other types of coherent receivers and modulation formats involving amplitude and phase modulation.

The analog electrical in-phase and quadrature component of the optical signal are sampled with analog-to-digital converters (ADCs) 123, 124. The sampled digital signals are then processed in the digital domain by a digital signal processor (DSP) 125 to pre-process the digital signals and to eventually demodulate the transmitted data.

An overview of such a coherent optical receiver 100 is illustrated in Fig. 2b where the 90° hybrid 110, the optical-to-electrical converters 121, 122, the ADCs 123, 124 and the DSP 125 is shown.

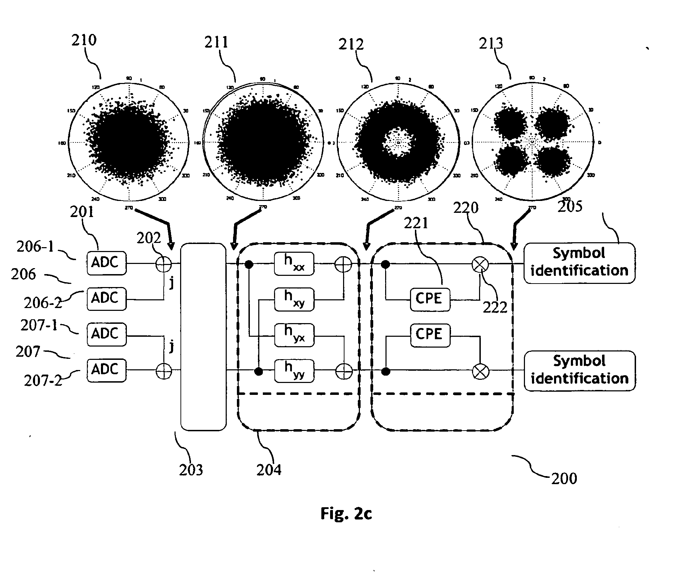

The processing steps that may be performed on the digital received signals are outlined in further detail in Fig. 2c. Fig. 2c illustrates an exemplary scenario of an optical receiver 200 for polarization multiplexed optical signals, i.e. optical signals comprising two orthogonally polarized optical signal components 206, 207. Each polarized optical signal component comprises an in-phase 206-1, 207-1 and a quadrature 206-2, 207-2 signal component as outlined above. For ease of illustration, only one of the polarized optical signal components 206 is considered in the following.

As mentioned above, the analog received signals are converted into digital signals using ADCs 201, thereby yielding digital received signals comprising an in-phase and a quadrature component. The samples of the two digital signal components in a time slot n may be converted from cartesian coordinates into polar coordinates in a conversion unit 202. As such, samples or symbols of the received signal in a time slot n may be obtained which can be described by an amplitude and by a phase. The samples or symbols of the received signal for a plurality of time slots are plotted in the diagram 210.

As part of the digital signal processing, compensation of linear-distortion effects, e.g. chromatic dispersion (CD) and/or polarization mode distortion (PMD), may be performed. This may be performed in the CD equalization unit 203. The outcome of the equalized symbols is illustrated in diagram 211.

If orthogonally polarized optical signals are received, then the optical receiver 200 may comprise a polarization de-multiplexer 204 which aims at de-multiplexing the two orthogonally multiplexed signal components or polarization tributaries using an adaptive equalizer. The equalizer may use e.g. a constant modulo algorithm (CMA) or decision directed algorithms as will be outlined in further detail below. As an outcome, de-multiplexed symbols are obtained as illustrated in diagram 212.

The optical receiver 200 may also comprise a carrier phase recovery and compensation unit 220. The inputs to the carrier phase recovery and compensation unit 220 are possibly pre-processed symbols which comprise an amplitude and a phase. The phase of the symbols at the transmitter comprises the phase of the optical carrier. This carrier phase may be submitted to various distortion effects within the optical transmission channel 60. Consequently, at the optical receiver 200, this carrier phase may be unknown and continuously changing. As such, the carrier phase recovery and compensation unit 220 comprises a carrier phase estimation unit 221 which continuously estimates the carrier phase. The estimated carrier phase may be used to synchronize the phase of the local oscillator (LO) accordingly and to thereby compensate the carrier phase fluctuations directly at the coherent optical receiver 100 in the optical domain. Alternatively or in addition, the carrier phase fluctuations may be compensated in the digital domain in the compensation unit 222. As an outcome symbols with a compensated carrier phase are obtained as illustrated in diagram 213.

It can be seen that the received and digitally processed symbols shown in diagram 213 are grouped into four clusters corresponding to the constellation points of a Q-PSK modulation. In other words, the constellation of the symbol states has been fixed as an outcome of the compensation of the carrier phase fluctuations.

Subsequently, the digitally processed symbols are submitted to the symbol identification unit 205 which performs the mapping of the digitally processed symbols to the constellation points of the underlying modulation scheme.

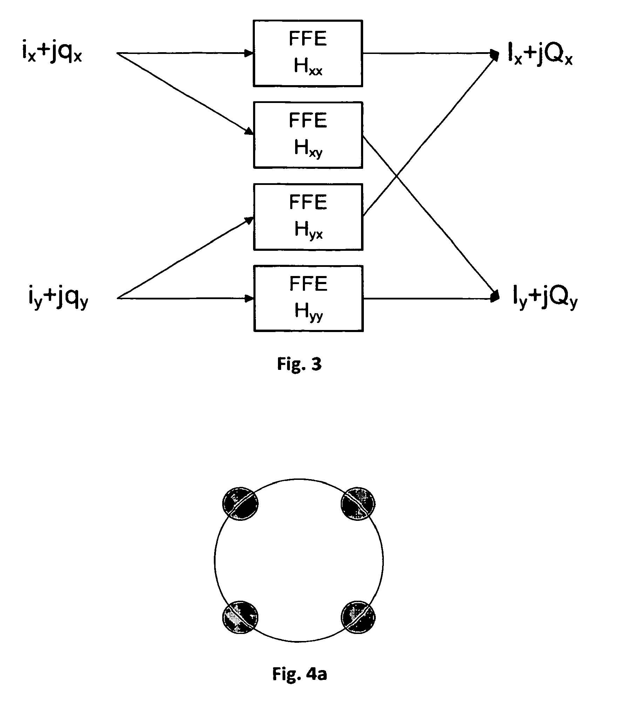

In the following, the polarization de-multiplexer 204 will be described in further detail. The polarization de-multiplexer 204 typically comprises a butterfly filter comprising four feed forward equalizers (FFE) as illustrated in Fig. 3. Each FFE may comprise a finite impulse response filter (FIR) of the type

$$H_{xx}(z) = \sum_i h_{xx}^i z^{-i} \, ,$$

and in a similar manner for $H_{xy}(z)$, $H_{yx}(z)$ and $H_{yy}(z)$. It should be noted that the polarization de-multiplexer 204 comprising FIR filters may perform the function of CD/PMD equalization unit 203, i.e. the polarization de-multiplexer may perform an equalization of the optical transmission channel 60. Furthermore, the polarization de-multiplexer 204 may have a delay function and thereby adapt the sampling time instants. For this purpose, the input signal to the polarization de-multiplexer 204 may be over-sampled (at a sampling rate higher than the signal rate), wherein the output of the polarization de-multiplexer 204 may be sampled at the signal rate. As such, the polarization de-multiplexer 204 may be referred to more generally as an equalization unit 204. More generally, it may be stated that the methods outlined in the present document apply to generic equalization units 204 comprising e.g. only a single FFE.

The parameters of the feed forward equalizers may be determined by the use of training data and/or by adaptive optimization schemes exploiting known characteristics of the received polarization division multiplexed (PDM) signal, wherein the latter scheme is also referred to as blind equalization. For the determination of the equalization parameters in a blind equalizer, the so-called constant modulus algorithm (CMA) may be used to adapt the FIR taps $h_{xx}^i$. The purpose of equalization is the possibility to achieve higher transmission distances using a given optical input power or to be able to reduce the optical input power for a given transmission distance, thereby reducing the extent of non-linear effects on the optical fiber.

The CMA algorithm was introduced by Godard (IEEE Tr. Comm, vol.28, no.11. pp. 1867-1875, 1980.). Furthermore, The CMA is discussed in the document "Digital Equalisation of 40Gbit/s per Wavelength Transmission over 2480km of Standard Fibre without Optical Dispersion Compensation", S.J. Savory et al., Proceedings of ECOC 2006, Cannes, France, paper Th2.5.5, Sep. 2006.

For signals of unit amplitude, the CMA tries to minimize the magnitude of the error term $E=(|s_{out}|-1)^2$, wherein $|s_{out}|$ is the intensity (or amplitude) of an output

signal $s_{out}$ of the equalization stage. In the present case, the signal $s_{out}$ may be the output signal of the polarization de-multiplexer 204, e.g. $s_{out}=I_x+jQ_x$ and/or $s_{out}=I_y+jQ_y$ in Fig. 3.

According to the CMA, the tap coefficients $h_{xx}^i$ for the feed forward equalization, with $i=1,...,N$, are computed in the following way:

$$\underline{h}_{xx}^i{}' = \underline{h}_{xx}^i + \mu E s_{out} \cdot \underline{s}_{in}^{\bullet} \, .$$

Here, the term $\underline{h}_{xx}^i{}'$ denotes the updated vectors of FIR filter coefficients $h_{xx}^i, i=1,...,N$, the term $\underline{h}_{xx}^i$ denotes the current vectors of FIR filter coefficients, $\mu$ is a convergence parameter, $s_{out}$ is the output signal of the equalizer and the term $s_{in}^*$ denotes the current vector of the complex conjugate of the input samples $s_{in}(k+1)$ to $s_{in}(k - N)$ to the equalization stage, wherein the input signal of the polarization de-multiplexer 204 may be e.g. $s_{in}=q_x+jq_x$ and/or $s_{in}=i_y+jq_y$ in Fig. 3. As such, the CMA determines and adapts the FIR filter coefficients in an iterative manner.

As indicated above, the CMA has been described for signals having unit amplitude, i.e. for signals which have been modulated using modulation schemes which do not perform amplitude modulation. As such, the CMA can be used in the context of PSK modulated signals. For example, in case of QPSK modulation all constellation points are located exactly on the unit circle (if neglecting noise). This is illustrated in Fig. 4a.

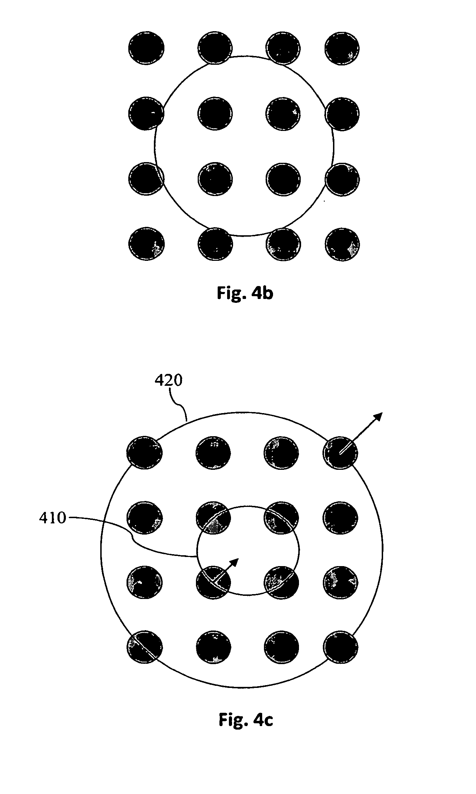

However, in order to further increase the bitrate per channel, higher level modulation schemes may need to be applied, e.g. 16QAM instead of QPSK modulation. As illustrated in Fig. 4b, none of the constellation points of 16QAM are located on the unit circle. CMA may still be applied, the fact that the constellation points have a systematic deviation from the unity circle, will lead to fluctuations during filter adaptation. Furthermore, the adaptation speed, accuracy and stability of the CMA are affected.

In view of these systematic deviations, a modified algorithm for iterative FIR filter coefficient determination and adaptation is proposed. In particular, it is proposed to define a plurality of circles, e.g. two circles, and to consider the deviation from these circles when adapting the filter coefficients. The adaptation of the filter coefficient may be performing by using a constant modulus algorithm as outlined above. By way of example, in the context of 16 QAM, a first, inner, circle and a second, outer, circle may be defined. The inner circle may be defined using the inner 4 constellation points of the 16QAM constellation. Furthermore, the second, outer, circle may be defined for the outer 4 constellation points of the 16QAM constellation. This is illustrated in Fig. 4c where the inner circle 410 and the outer circle 420 for a 16 QAM constellation are illustrated. As such, the inner circle 410 traverses the constellation points having the lowest amplitude and the outer circle 420 traverses the constellation points having the highest amplitude.

Using the two circles 410, 420, two error terms may be defined as $E_1 = m * \left( \left| s_{out} \right|^p - T_1^p \right)^2$ and $E_2 = \left( \left| s_{out} \right|^p - T_2^p \right)^2$, wherein $T_1$ is the radius of the first, inner, circle, $T_2$ is the radius of the second, outer, circle, $m$ is a weighting parameter between the first and second error term $E_1$ and $E_2$, and $p$ is an adjustment parameter (e.g. $p=1$ in a preferred embodiment).

In order to attribute output samples $s_{out}$ to the first or second circle, i.e. to the first or second error term, one may consider only a subset of output samples $s_{out}$ for the determination of the error terms. By way of example, only the output samples lying within the inner circle may be considered for determining the first error term $E_1$ associated with the inner circle $T_1$, and only the output samples lying outside of the outer circle $T_2$ may be considered for determining the second error term $E_2$. The output samples lying in-between both circuits may be neglected.

The plurality of error terms $E_1$ and $E_2$ which are associated with the plurality of circles $T_1$ and $T_2$, respectively, may be used to define a modified constant modulus algorithm. The new algorithm may be referred to as threshold directed multi modulus algorithm (TD-MMA). In a similar manner to the CMA, the error terms $E_1$ and $E_2$ can be used to calculate updated FIR filter coefficients $h_{xx}^i$, $i =1,...,N$, in an iterative manner.

However, in contrary to the constant modulus algorithm, where a single unit circle is assumed, the radius of the circles 410, 420, i.e. $T_1$ and $T_2$, are not known and have to controlled. In other words, in order to ensure operation of the TD-MMA, the diameter of the inner and outer circle, and/or the ratio of the circle diameters should be controlled. Furthermore, the weighting parameter $m$, which controls the emphasis on the deviations from the inner circle versus deviations from the outer circle, may be controlled.

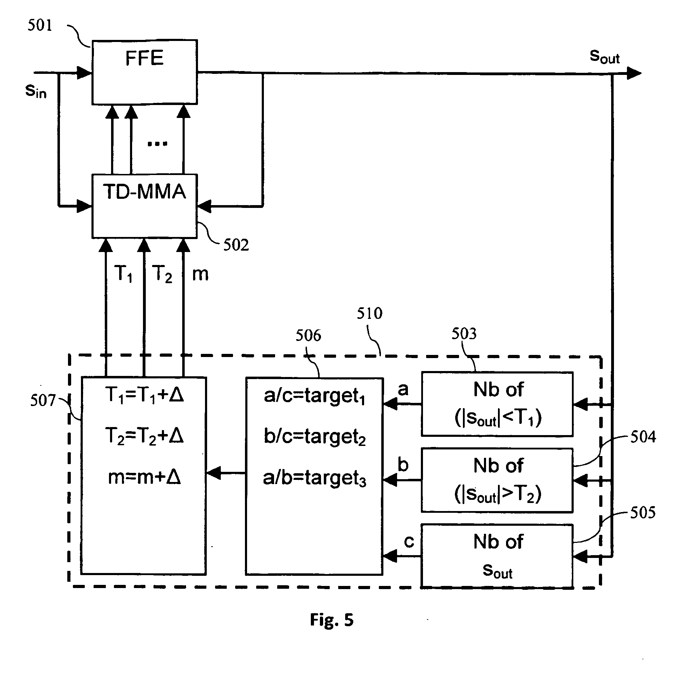

An example implementation of the TD-MMA algorithm including a control mechanism for the parameters $T_1$, $T_2$ and $m$ is illustrated in Fig. 5. An example feed forward equalizer 501, e.g. one of the four FFEs of Fig. 3, is shown. The input signal $s_{in}$ may be $s_{in}=q_x+jq_x$ or $s_{in}=i_y+jq_y$, and the output signal $s_{out}$ may be $s_{out}=I_x+jQ_x$ or $s_{out}=I_y+jQ_y$ of Fig. 3. As such, the FFE 501 may be one of the FIR filters $H_{xx}(z)$, $H_{xy}(z)$, $H_{yx}(z)$ or $H_{yy}(z)$.

The FIR filter coefficients are determined using a constant modulus algorithm in the TD-MMA unit 502, wherein the overall error term E is determined from a combination of the first and second error terms $E_1$, and $E_2$, e.g. $E = E_1 + E_2$. In order to determine the first and second error term $E_1$ and $E_2$, the TD-MMA unit 502 proceeds as outlined above, i.e. $E_1 = m * \left( \left| s_{out} \right|^p - T_1^p \right)^2$ and $E_2 = \left( \left| s_{out} \right|^p - T_2^p \right)^2$ are determined, wherein for the determination of $E_1$ only output signal samples lying within the inner circle 410, and for the determination of $E_2$ only output signal samples lying outside of the outer circle 420 are considered. The TD-MMA unit 502 may also be referred to as filter coefficient update unit 502.

Appropriate values for the circle radii $T_1$, $T_2$ and for the weighting parameter $m$ may be determined by an adaptation unit 510 for the MMA parameters, i.e. for $T_1$, $T_2$ and $m$ (also referred to as a threshold or radius adaption unit 510 in the present document). In other words, the adaptation unit 510 for MMA parameters may control the two circle diameters and/or a weighting factor for the error terms.

The adaptation unit 510 comprises a plurality of counter units 503, 504, 505. A first counter unit 503 counts the number of samples of $s_{out}$ with a magnitude or amplitude smaller than the first threshold or circle radius $T_1$. In other words, the first counter unit 503 counts the number of samples which lie within the first, inner, circle. The second counter unit 504 counts the number of samples of $s_{out}$ with a magnitude or amplitude greater than the second threshold or circle radius $T_2$. In other words, the second counter unit 504 counts the number of samples which lie outside of the second, outer, circle. A total counter unit 505 determines the overall number of investigated samples of $s_{out}$. The counter units 503, 504, 505 determine counts a, b, c, respectively. These counts may be determined blockwise, e.g. for a predetermined time interval. Alternatively, these counts may be determined continuously, e.g. using a sliding window or moving average approach.

The counts a, b, c are passed to a verification unit 506 which determines the relative ratios a/c and b/c. The first ratio a/c indicates the fraction of samples of $s_{out}$ which lie within the inner circle 410. The second ratio b/c indicates the fraction of samples of $s_{out}$ which lie outside of the outer circle 420. These ratios are compared to their respective target values or target indicators. It can be seen in Fig. 4c that in the case of 16QAM, four out of 16 samples should lie inside the inner circle 410 50% of the time, i.e. the first target value target$_1$ should be 50% of 1/4, i.e. 1/8. Furthermore, it can be seen that four out of 16 samples should lie outside of the outer circle 420 50% of the time, i.e. the second target value target$_2$ should also be 1/8.

The verification unit 506 may determine other indicators which indicate a deviation of the radii or thresholds $T_1$ and $T_2$ from their target value. In particular the verification unit 506 may count the amount of deviations from the inner threshold T1 and the amount of deviations from the outer threshold T2. Subsequently the amounts may be divided to determine a ratio a/b. This ratio a/b may be compared to a target value target3. In other words, a ratio a/b, i.e. the ratio of the number of samples lying inside the inner circle and the number of samples lying outside the outer sample, may be determined. This ratio a/b is compared to a target value $target_3$, which in the case of 16QAM should be 1. If the ratio a/b is greater than the target value $target_3$, then the radii or thresholds $T_1$ and $T_2$ could be increased and vice versa. Alternatively or in addition, the weighting parameter $m$ may be controlled based on the ratio a/b. The weighting parameter $m$ may be increased if the ratio a/b is greater than the target value $target_3$ and/or vice versa.

The different ratios and/or indicators may be used to determine one or more adaption parameters $\Delta$, which are used in the parameter update unit 507 to determine a new set of MMA parameters $T_1$, $T_2$ and/or $m$. By way of example, if the ratio a/c is lower than $target_1$, the radius $T_1$ may be increased by a pre-determined adaption parameter $\Delta_1$, and vice versa. In a similar manner, if the ratio b/c is lower than $target_1$, the radius $T_2$ may be decreased by a pre-determined adaption parameter $\Delta_2$, and vice versa. The weighting parameter $m$ may be controlled using the ratio a/b. If the ratio a/b exceeds $target_3$ the weighting parameter $m$ may be increased by a pre-determined adaption parameter $\Delta_3$, and vice versa. As such, more emphasis can be put on the first error term $E_1$ and vice versa.

In an embodiment, the one or more pre-determined adaption parameters $\Delta$ may be controlled. By way of example, the adaption parameters $\Delta$ may be increased and/or decreased depending on the extent of deviation of the determined ratios a/c, b/c and/or a/b from the respective target values $target_1$, $target_2$ and/or $target_3$. If the extent of deviation is above a certain threshold, the adaption parameters $\Delta$ may be increased and/or vice versa.

In the present document, a method and system for performing equalization of an optical transmission channel has been described. In particular, a method for determining appropriate equalization parameters for polarization de-multiplexing has been described. This method is applicable to high order modulation schemes having constellation points which do not lie on a single unit circle, such as 16 QAM or higher. The described method does not incur any systematic deviations and thereby ensures optimum performance, a high degree of stability and high adaptation speed. The polarization de-multiplexer outlined in the present document is particularly well suited for use in optical transmission systems at 100 Gb/s data rate and beyond.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An equalizing unit (125, 203, 204) for an input signal, wherein the input signal has been amplitude and phase modulated using a modulation scheme, and transmitted over a transmission channel; the equalizing unit (125, 203, 204) comprising:

   - a filter (501) adapted to filter the input signal using one or more filter taps, thereby yielding an output signal; wherein the output signal comprises a plurality of output samples having a plurality of output amplitudes, respectively; and
   - a filter adaption unit (502) adapted to

      - determine a first deviation of the output amplitude of at least some of the plurality of output samples from a first threshold;
      - determine a second deviation of the output amplitude of at least some of the plurality of output samples from a second threshold; wherein the second threshold is greater than the first threshold and wherein the first threshold and the second threshold are associated with a first constellation amplitude and second constellation amplitude of constellation points of the modulation scheme, respectively; and
      - update the one or more filter taps based on the first and second deviations.

2. The equalization unit (125, 203, 204) of claim 1, wherein the filter adaption unit (502) is adapted to

   - determine the first deviation considering only output samples having an output amplitude smaller or equal to the first threshold; and
   - determine the second deviation considering only output samples having an output amplitude greater or equal to the second threshold.

3. The equalization unit (125, 203, 204) of any previous claim, wherein the filter adaption unit (502) is adapted to

   - update the one or more filter taps using a weighted sum of the first and second deviation.

4. The equalization unit (125, 203, 204) of any previous claim, wherein the filter adaption unit (502) is adapted to

   - update the one or more filter taps using a constant modulus algorithm.

5. The equalization unit (125, 203, 204) of any previous claim, further comprising:

   - a threshold adaption unit (510) adapted to update the first and second thresholds based on the plurality of output amplitudes.

6. The equalization unit (125, 203, 204) of claim 5, wherein the threshold adaption unit (510) is adapted to

   - determine a first indicator of an amount of output samples having an output amplitude smaller or equal to the first threshold;
   - determine a second indicator of an amount of output samples having an output amplitude greater or equal to the second threshold; and
   - update the first and second threshold based on the first and second indicators.

7. The equalization unit (125, 203, 204) of claim 6, wherein

   - the first indicator indicates the portion of output samples from the plurality of output samples which have an output amplitude smaller or equal to the first threshold; and
   - the second indicator indicates the portion of output samples from the plurality of output samples which have an output amplitude greater or equal to the second threshold.

8. The equalization unit (125, 203, 204) of any of claims 6 to 7, wherein

   - the threshold adaption unit (510) is adapted to compare the first and second indicators with a first and a second target indicator; and
   - the first target indicator is indicative of a probability for an output sample to have an output amplitude smaller or equal to the first constellation amplitude, and/or
   - the second target indicator is indicative of a probability for an output sample to have an output amplitude greater or equal to the second constellation amplitude.

9. The equalization unit (125, 203, 204) of claim 8, wherein

   - the first threshold is decreased, if the first indicator is higher than the first target indicator; and/or
   - the second threshold is increased, if the second indicator is higher than the second target indicator.

10. The equalization unit (125, 203, 204) of any of claims 8 to 9, referring back to claim 3, wherein

   - the threshold adaption unit (510) is adapted to determine a weight based on the first and second indicators; and
- the weight is used to determine the weighted sum of the first and second deviations.

11. The equalization unit (125, 203, 204) of claim 10, wherein

- the weight is applied to the first deviation; and
- the weight is increased, if a ratio of the first indicator over the second indicator is higher than a ratio of the first target indicator over the second target indicator.

12. The equalization unit (125, 203, 204) of any previous claim, wherein

- the input signal is derived from an optical signal received at a coherent optical receiver;
- the modulation scheme is any one of 16QAM, 64 QAM, 128QAM, 256QAM or a other higher level modulation scheme;
- the first constellation amplitude is the smallest amplitude of constellation points of the modulation scheme; and/or
- the second constellation amplitude is the highest amplitude of constellation points of the modulation scheme.

13. The equalization unit (125, 203, 204) of any previous claim, wherein the equalization unit (125, 203, 204) is adapted to perform one or more of

- polarization de-multiplexing of the input signal; and/or
- equalization of chromatic dispersion and/or polarization mode dispersion incurred by the input signal on the transmission channel; and/or.
- equalization of degradations from systems bandwidth limitations; and/or
- adjusting of a variable signal delay for resampling of data at an optimized phase.

14. A coherent optical receiver (100), comprising

- a coherent mixer (110) adapted to

- superimpose a received optical signal (101) with an optical signal (102) generated by a local oscillator; and
- generate two sets of in-phase and quadrature phase signals, the two sets having orthogonal polarizations with respect to one another;

- an optical to digital conversion unit (121, 122, 123, 124) adapted to convert the two sets of in-phase and quadrature phase signals into two digital complex input signals, respectively; wherein the two input signals comprise a plurality of input samples having a plurality of input amplitudes, respectively; and
- an equalization unit (125, 203, 204) according to any of claims 1 to 13, adapted to polarization de-multiplex and/or equalize the two input signals.

15. A method for equalizing an input signal, wherein the input signal has been amplitude and phase modulated using a modulation scheme and transmitted over a transmission channel; the method comprising:

- filtering the input signal using one or more filter taps, thereby yielding an output signal; wherein the output signal comprises a plurality of output samples having a plurality of output amplitudes, respectively;
- determining a first deviation of the output amplitude of at least some of the plurality of output samples from a first threshold;
- determining a second deviation of the output amplitude of at least some of the plurality of output samples from a second thresholds; wherein the second threshold is greater than the first threshold and wherein the first and second threshold are associated with a first constellation amplitude and second constellation amplitude of constellation points of the modulation scheme, respectively; and
- updating the one or more filter taps based on the first and second deviations.

**Patentansprüche**

1. Entzerrungseinheit (125, 203, 204) für ein Eingangssignal, wobei das Eingangssignal unter Verwendung eines Modulationsschemas amplituden- und phasenmoduliert und über einen Übertragungskanal übertragen wurde; wobei die Entzerrungseinheit (125, 203, 204) umfasst:

- Einen Filter (501), welche dazu ausgelegt ist, das Eingangssignal unter Verwendung eines oder mehrerer Filter-Taps zu filtern, wodurch ein Ausgangssignal erhalten wird; wobei das Ausgangssignal eine Vielzahl von Ausgangsabtastwerten mit jeweils einer Vielzahl von Ausgangsamplituden enthält; und
- eine Filteradaptionseinheit (502), welche für das Durchführen der folgenden Schritte ausgelegt ist:

- Ermitteln einer ersten Abweichung der Ausgangsamplitude mindestens einiger der Vielzahl von Ausgangsabtastwerten von einem ersten Grenzwert;

- Ermitteln einer zweiten Abweichung der Ausgangsamplitude mindestens einiger der Vielzahl von Ausgangsabtastwerten von einem zweiten Grenzwert; wobei der zweite Grenzwert größer als der erste Grenzwert ist, und wobei der erste Grenzwert und der zweite Grenzwert mit jeweils einer ersten Konstellationsamplitude und einer zweiten Konstellationsamplitude von Konstellationspunkten des Modulationsschemas assoziiert sind; und

- Aktualisieren des einen oder der mehreren Filter-Taps auf der Basis der ersten und der zweiten Abweichung.

2.  Entzerrungseinheit (125, 203, 204) nach Anspruch 1, wobei die Filteradaptionseinheit (502) für das Durchführen der folgenden Schritte ausgelegt ist:

- Ermitteln der ersten Abweichung, wobei nur Ausgangsabtastwerte berücksichtigt werden, deren Ausgangsamplitude kleiner als der erste oder gleich dem ersten Grenzwert ist; und
- Ermitteln der zweiten Abweichung, wobei nur Ausgangsabtastwerte, deren Ausgangsamplitude größer als der zweite oder gleich dem zweiten Grenzwert ist.

3.  Entzerrungseinheit (125, 203, 204) nach einem beliebigen der vorstehenden Ansprüche, wobei die Filteradaptionseinheit (502) für das Durchführen des folgenden Schritts ausgelegt ist:

- Aktualisieren des einen oder der mehreren Filter-Taps unter Verwindung einer gewichteten Summe der ersten und der zweiten Abweichung.

4.  Entzerrungseinheit (125, 203, 204) nach einem beliebigen der vorstehenden Ansprüche, wobei die Filteradaptionseinheit (502) für das Durchführen des folgenden Schritts ausgelegt ist:

- Aktualisieren des einen oder der mehreren Filter-Taps unter Verwendung eines Konstant-Modulus-Algorithmus.

5.  Entzerrungseinheit (125, 203, 204) nach einem beliebigen der vorstehenden Ansprüche, weiterhin umfassend:

- Eine Grenzwertadaptionseinheit (510) für das Aktualisieren des ersten und des zweiten Grenzwerts auf der Basis der Vielzahl von Ausgangsamplituden ausgelegt ist.

6.  Entzerrungseinheit (125, 203, 204) nach Anspruch 5, wobei die Grenzwertadaptionseinheit (510) für das Durchführen der folgenden Schritte ausgelegt ist:

- Ermitteln eines ersten Indikators einer Menge von Ausgangsabtastwerten, deren Ausgangsamplitude kleiner als der erste oder gleich dem ersten Grenzwert ist;
- Ermitteln eines zweiten Indikators einer Menge von Ausgangsabtastwerten, deren Ausgangsamplitude größer als der zweite oder gleich dem zweiten Grenzwert ist; und
- Aktualisieren des ersten und des zweiten Grenzwerts auf der Basis des ersten und des zweiten Indikators.

7.  Entzerrungseinheit (125, 203, 204) nach Anspruch 6, wobei

- der erste Indikator den Teil von Ausgangsabtastwerten aus der Vielzahl von Ausgangsabtastwerten anzeigt, deren Ausgangsamplitude kleiner als der erste oder gleich dem ersten Grenzwert ist; und
- der zweite Indikator den Teil von Ausgangsabtastwerten aus der Vielzahl von Ausgangsabtastwerten anzeigt, deren Ausgangsamplitude kleiner als der zweite oder gleich dem zweiten Grenzwert ist.

8.  Entzerrungseinheit (125, 203, 204) nach einem beliebigen der Ansprüche 6 bis 7, wobei

- die Grenzwertadaptionseinheit (510) für das Vergleichen des ersten und des zweiten Indikators mit einem ersten und einem zweiten Soll-Indikators ausgelegt ist; und
- der erste Soll-Indikator für eine Wahrscheinlichkeit, dass die Ausgangsamplitude eines Ausgangsabtastwerts kleiner als die erste oder gleich der ersten Konstellationsamplitude ist, indikativ ist, und/oder
- der zweite Soll-Indikator für eine Wahrscheinlichkeit, dass die Ausgangsamplitude eines Ausgangsabtastwerts größer als die zweite oder gleich der zweiten Konstellationsamplitude ist, indikativ ist.

9.  Entzerrungseinheit (125, 203, 204) nach Anspruch 8, wobei

- der erste Grenzwert verringert wird, wenn der erste Indikator höher als der erste Soll-Indikator ist; und/oder
- der zweite Grenzwert erhöht wird, wenn der zweite Indikator höher als der zweite Soll-Indikator ist.

**10.** Entzerrungseinheit (125, 203, 204) nach einem beliebigen der Ansprüche 8 bis 9, unter Zurückverweisen auf Anspruch 3, wobei

- die Grenzwertadaptionseinheit (510) für das Ermitteln einer Gewichtung auf der Basis des ersten und des zweiten Indikators ausgelegt ist; und
- die Gewichtung verwendet wird, um die gewichtete Summe der ersten und der zweiten Abweichung zu ermitteln.

**11.** Entzerrungseinheit (125, 203, 204) nach Anspruch 10, wobei

- die Gewichtung auf die erste Abweichung angewendet wird; und
- die Gewichtung erhöht wird, wenn ein Verhältnis des ersten Indikators zu dem zweiten Indikator höher ist als ein Verhältnis des ersten Soll-Indikators zu dem zweiten Soll-Indikator,

**12.** Entzerrungseinheit (125, 203, 204) nach einem beliebigen der vorstehenden Ansprüche, wobei

- das Eingangssignal von einem an einem kohärenten optischen Empfänger empfangenen optischen Signal abgeleitet wird;
- das Modulationsschema beliebig ein 16-QAM, 64-QAM, 128-QAM, 256-QAM oder ein höherstufiges Modulationsschema ist;
- die erste Konstellationsamplitude die kleinste Amplitude von Konstellationspunkten des Modulationsschemas ist; und/oder
- die zweite Konstellationsamplitude die höchste Amplitude von Konstellationspunkten des Modulationsschemas ist.

**13.** Entzerrungseinheit (125, 203, 204) nach einem beliebigen der vorstehenden Ansprüche, wobei die Entzerrungseinheit (125, 203, 204) dazu ausgelegt ist, einen oder mehrere der folgenden Schritte durchzuführen:

- Polarisationsdemultiplexen des Eingangssignals; und/oder
- Entzerren der chromatischen Dispersion und/oder der Polarisationsmodusdispersion, welche durch das Eingangssignal auf dem Übertragungskanal entstanden ist; und/oder
- Entzerren von Degradationen aufgrund von Systembandbreitenbegrenzungen; und/oder
- Einstellen einer variablen Signalverzögerung zum erneuten Abtasten von Daten bei einer optimierten Phase.

**14.** Kohärenter optischer Empfänger (100), umfassend:

- einen kohärenten Mischer (110), welcher für das Durchführen der folgenden Schritte ausgelegt ist:

- Überlagern eines empfangenen optischen Signals (101) mit einem von einem lokalen Oszillator erzeugten optischen Signal (102); und
- Erzeugen von zwei Sätzen von In-Phase- und Quadraturphasen-Signalen, wobei die beiden Sätze orthogonale Polarisationen im Verhältnis zueinander aufweisen;

- eine optisch-zu-digital-Wandlungseinheit (121, 122, 123, 124), welche dazu ausgelegt ist, die beiden Sätze von In-Phase- und Quadraturphasen-Signalen in jeweils zwei digitale komplexe Eingangssignale umzuwandeln; wobei die beiden Eingangssignale eine Vielzahl von Eingangsabtastwerten mit jeweils einer Vielzahl von Eingangsamplituden aufweisen; und
- eine Entzerrungseinheit (125, 203, 204) gemäß einem beliebigen der Ansprüche 1 bis 13, welche für das Polarisationsdemultiplexen und/oder das Entzerren der beiden Eingangssignale ausgelegt ist.

**15.** Verfahren zum Entzerren eines Eingangssignals, wobei das Eingangssignal unter Verwendung eines Modulationsschemas amplituden- und phasenmoduliert und über einen Übertragungskanal übertragen wurde; wobei das Verfahren umfasst:

- Filtern des Eingangssignals unter Verwendung eines oder mehrerer Filter-Taps, wodurch ein Ausgangssignal erhalten wird; wobei das Ausgangssignal eine Vielzahl von Ausgangsabtastwerten mit jeweils einer Vielzahl von Ausgangsamplituden enthält; und
- Ermitteln einer ersten Abweichung der Ausgangsamplitude mindestens einiger der Vielzahl von Ausgangsabtastwerten von einem ersten Grenzwert;
- Ermitteln einer zweiten Abweichung der Ausgangsamplitude mindestens einiger der Vielzahl von Ausgangsabtastwerten von einem zweiten Grenzwert; wobei der zweite Grenzwert größer als der erste Grenzwert ist, und wobei der erste und der zweite Grenzwert mit jeweils einer ersten Konstellationsamplitude und einer zweiten Konstellationsamplitude von Konstellationspunkten des Modulationsschemas assoziiert sind; und
- Aktualisieren des einen oder der mehreren Filter-Taps auf der Basis der ersten und der zweiten Abweichung.

## Revendications

1. Unité d'égalisation (125, 203, 204) pour un signal d'entrée, le signal d'entrée ayant été modulé en amplitude et en phase en utilisant un schéma de modulation et transmis sur un canal de transmission ; l'unité d'égalisation (125, 203, 204) comprenant :

   - un filtre (501) adapté pour filtrer le signal d'entrée en utilisant une ou plusieurs prises de filtre, produisant ainsi un signal de sortie ; le signal de sortie comprenant une pluralité d'échantillons de sortie qui possèdent respectivement une pluralité d'amplitudes de sortie ; et
   - une unité d'adaptation de filtre (502) adaptée pour

      - déterminer un premier écart de l'amplitude de sortie d'au moins certains parmi la pluralité d'échantillons de sortie par rapport à un premier seuil ;
      - déterminer un deuxième écart de l'amplitude de sortie d'au moins certains parmi la pluralité d'échantillons de sortie par rapport à un deuxième seuil ; le deuxième seuil étant supérieur au premier seuil et le premier seuil et le deuxième seuil étant respectivement associés à une première amplitude de constellation et une deuxième amplitude de constellation de points de constellation du schéma de modulation ; et
      - mettre à jour la ou les plusieurs prises de filtre en se basant sur le premier et le deuxième écarts.

2. Unité d'égalisation (125, 203, 204) selon la revendication 1, avec laquelle l'unité d'adaptation de filtre (502) est adaptée pour

   — déterminer le premier écart en prenant uniquement en considération les échantillons de sortie dont l'amplitude de sortie est inférieure ou égale au premier seuil ; et
   — déterminer le deuxième écart en prenant uniquement en considération les échantillons de sortie dont l'amplitude de sortie est égale ou supérieure au deuxième seuil.

3. Unité d'égalisation (125, 203, 204) selon l'une quelconque des revendications précédentes, avec laquelle l'unité d'adaptation de filtre (502) est adaptée pour

   — mettre à jour la ou les plusieurs prises de filtre en utilisant un total pondéré du premier et du deuxième écarts.

4. Unité d'égalisation (125, 203, 204) selon l'une quelconque des revendications précédentes, avec laquelle l'unité d'adaptation de filtre (502) est adaptée pour

   — mettre à jour la ou les plusieurs prises de filtre en utilisant un algorithme à modulo constant

5. Unité d'égalisation (125, 203, 204) selon l'une quelconque des revendications précédentes, comprenant en outre :

   — une unité d'adaptation de seuil (510) adaptée pour mettre à jour le premier et le deuxième seuils en se basant sur la pluralité d'amplitudes de sortie.

6. Unité d'égalisation (125, 203, 204) selon la revendication 5, avec laquelle l'unité d'adaptation de seuil (510) est adaptée pour

   — déterminer un premier indicateur d'un nombre d'échantillons de sortie dont l'amplitude de sortie est inférieure ou égale au premier seuil ;
   — déterminer un deuxième indicateur d'un nombre d'échantillons de sortie dont l'amplitude de sortie est égale ou supérieure au deuxième seuil ; et
   — mettre à jour le premier et le deuxième seuils en se basant sur le premier et le deuxième indicateurs.

7. Unité d'égalisation (125, 203, 204) selon la revendication 6, avec laquelle

   — le premier indicateur indique la portion d'échantillons de sortie parmi la pluralité d'échantillons de sortie qui présentent une amplitude de sortie inférieure ou égale au premier seuil ; et
   — le deuxième indicateur indique la portion d'échantillons de sortie parmi la pluralité d'échantillons de sortie qui présentent une amplitude de sortie égale ou supérieure au deuxième seuil.

8. Unité d'égalisation (125, 203, 204) selon l'une quelconque des revendications 6 à 7, avec laquelle

   — l'unité d'adaptation de seuil (510) est adaptée pour comparer le premier et le deuxième indicateurs avec un premier et un deuxième indicateurs cibles ; et
   — le premier indicateur cible indique une probabilité pour qu'un échantillon de sortie présente une amplitude de sortie inférieure ou égale à la première amplitude de constellation, et/ou
   — le deuxième indicateur cible indique une probabilité pour qu'un échantillon de sortie présente une amplitude de sortie égale ou supérieure à la deuxième amplitude de constellation.

9. Unité d'égalisation (125, 203, 204) selon la revendication 8, avec laquelle

— le premier seuil est rabaissé si le premier indicateur est supérieur au premier indicateur cible ; et/ou
— le deuxième seuil est relevé si le deuxième indicateur est supérieur au deuxième indicateur cible.

10. Unité d'égalisation (125, 203, 204) selon l'une quelconque des revendications 8 à 9 se référant à la revendication 3, avec laquelle

— l'unité d'adaptation de seuil (510) est adaptée pour déterminer un poids en se basant sur le premier et le deuxième indicateurs ; et
— le poids est utilisé pour déterminer le total pondéré du premier et du deuxième écarts.

11. Unité d'égalisation (125, 203, 204) selon la revendication 10, avec laquelle

— le ponds est appliqué au premier écart ; et
— le poids est augmenté si un rapport du premier indicateur sur le deuxième indicateur est supérieur à un rapport du premier indicateur cible sur le deuxième indicateur cible.

12. Unité d'égalisation (125, 203, 204) selon l'une quelconque des revendications précédentes, avec laquelle

— le Signal d'entrée est dérivé d'un signal optique reçu sur un récepteur optique cohérent ;
— le schéma de modulation est l'un quelconque parmi MAQ-16, MAQ-64, MAQ-128, MAQ-256 ou un autre schéma de modulation de niveau plus relevé ;
— la première amplitude de constellation est la plus petite amplitude des points de constellation du schéma de modulation ; et
— la deuxième amplitude de constellation est la plus élevée des amplitudes des points de constellation du schéma de modulation.

13. Unité d'égalisation (125, 203, 204) selon l'une quelconque des revendications précédentes, avec laquelle l'unité d'égalisation (125, 203, 204) est adaptée pour exécuter une ou plusieurs des opérations suivantes :

— démultiplexage en polarisation du signal d'entrée ; et/ou
— égalisation de la dispersion chromatique et/ou de la dispersion du mode de polarisation subit par le signal d'entrée sur le canal de transmission ;
et/ou
— égalisation des dégradations résultant des limitations de la largeur de bande du système ;
et/ou
— ajustement d'un retard de signal variable pour rééchantillonner les données à une phase optimisée.

14. Récepteur optique cohérent (100), comprenant

— un mélangeur cohérent (110) adapté pour

- superposer à un signal optique reçu (101) un signal optique (102) généré par un oscillateur local ; et
- générer deux ensembles de signaux en phase et quadrivalentes, les deux ensembles ayant des polarisations mutuellement orthogonales ;

— une unité de conversion optique en numérique (121, 122, 123, 124) adaptée pour convertir les deux ensembles de signaux en phase et quadrivalents respectivement en deux signaux d'entrée complexes ; les deux signaux d'entrée comprenant une pluralité d'échantillons d'entrée qui présentent respectivement une pluralité d'amplitudes d'entrée ; et
— une unité d'égalisation (125, 203, 204) selon l'une quelconque des revendications 1 à 13, adaptée pour démultiplexer en polarisation et/ou égaliser les deux signaux d'entrée.

15. Procécé d'égalisation d'un signal d'entrée, le signal d'entrée ayant été modulé en amplitude et en phase en utilisant un schéma de modulation et transmis sur un canal de transmission ; le procédé comprenant les étapes suivantes :

— filtrage du signal d'entrée en utilisant une ou plusieurs prises de filtre, produisant ainsi un signal de sortie ; le signal de sortie comprenant une pluralité d'échantillons de sortie qui possèdent respectivement une pluralité d'amplitudes de sortie ;
— détermination d'un premier écart de l'amplitude de sortie d'au moins certains parmi la pluralité d'échantillons de sortie par rapport à un premier seuil ;
— détermination d'un deuxième écart de l'amplitude de sortie d'au moins certains parmi la pluralité d'échantillons de sortie par rapport à un deuxième seuil ; le deuxième seuil étant supérieur au premier seuil et le premier seuil et le deuxième seuil étant respectivement associés à une première amplitude de constellation et une deuxième amplitude de constellation de points de constellation du schéma de modulation ; et
— mise à jour de la ou des plusieurs prises de filtre en se basant sur le premier et le deuxième écarts.

**Fig. 1**

**Fig. 2a**

**Fig. 2b**

**Fig. 2c**

Fig. 3

Fig. 4a

**Fig. 4b**

**Fig. 4c**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080031633 A

**Non-patent literature cited in the description**

- **GODARD.** *IEEE Tr. Comm,* 1980, vol. 28 (11), 1867-1875

- **S.J. SAVORY et al.** Digital Equalisation of 40Gbit/s per Wavelength Transmission over 2480km of Standard Fibre without Optical Dispersion Compensation. *Proceedings of ECOC 2006,* September 2006